# EUROPEAN PATENT APPLICATION

(11) **EP 4 604 514 A1**
(43) Date of publication of application: **20.08.2025**
(21) Application number: 24382160.0
(22) Date of filing: 16.02.2024
(51) Int. Cl.: H04N 7/18, H04N 19/10, H04N 21/81, H04N 21/218, H04N 23/698

(54) **AN APPARATUS, A METHOD AND A COMPUTER PROGRAM FOR VIDEO STREAMING**

(71) Applicant: Nokia Technologies Oy, 02610 Espoo (FI)
(72) Inventor: You, Yu, 33180 Tampere (FI); Baris Aksu, Emre, 33800 Tampere (FI); Nortes Nolasco, Alberto, 28222 Majadahonda (ES); Casal Martin, Juan, 28035 Madrid (ES)
(74) Representative: Balder IP Law, S.L.

(57) **Abstract**

A method comprising: obtaining 360-degree omnidirectional media content; dividing the 360-degree omnidirectional media content into a plurality of sub-region contents, wherein a field-of-view of each sub-region content covers at least partly different regions of the 360-degree omnidirectional media content such that combined field-of-views of the plurality of sub-region contents cover the 360-degree omnidirectional media content; cropping each of the plurality of sub-region contents into a corresponding viewport; encoding each of the cropped plurality of sub-region contents into a sub-media stream having the corresponding viewport and comprising metadata relating to the sub-region; receiving, from a client, signaling regarding parameters of a field-of-view to be used in rendering of the 360-degree omnidirectional media content; and streaming the sub-media stream having the viewport corresponding to said parameters of the field-of-view to the client.

## Description

### TECHNICAL FIELD

The present invention relates to an apparatus, a method and a computer program for video streaming, particularly 360 degree video streaming.

### BACKGROUND

Recently, the development of various multimedia streaming applications, especially 360-degree video or virtual reality (VR) applications, has advanced with big steps. In viewport-adaptive streaming (VAS) (a.k.a. viewport-dependent delivery (VDD)), the bitrate is aimed to be reduced e.g. such that the primary viewport (i.e., the current viewing orientation) is transmitted at the best quality/resolution, while the remaining of 360-degree video is transmitted at a lower quality/resolution. When the viewing orientation changes, e.g. when the user turns his/her head when viewing the content with a client device, such as a head-mounted display (HMD), another version of the content needs to be streamed, matching the new viewing orientation.

Many use cases require video resolutions to be up to 8K (and beyond), which implies the need of high bitrate video delivery that makes it difficult to be delivered in real-time over current networks. VDD technology is needed to save the bandwidth with a decent 8K video bitrate. Nevertheless, the region outside the viewport is never viewed but only contributes to bandwidth and resolution waste.

In 8K VDD streaming mode, the coded picture (viewport or 360 picture with a high-quality viewport region) is receiver-independent, i.e., it is impossible to delivery different coded picture representing different viewports or viewing directions with respect to the 360-degree space to different receivers. A separate video encoder would be needed for every possible viewport settings from large number of client devices.

This inevitably reduces the possible number of client devices, for which the VDD streaming could be concurrently carried out by the contemporary streaming servers or cloud-based streaming services.

### SUMMARY

Now, an improved method and technical equipment implementing the method has been invented, by which the above problems are alleviated. Various aspects include methods, apparatuses and a computer readable medium comprising a computer program, or a signal stored therein, which are characterized by what is stated in the independent claims. Various details of the embodiments are disclosed in the dependent claims and in the corresponding images and description.

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there a provided an apparatus comprising means for obtaining 360-degree omnidirectional media content; means for dividing the 360-degree omnidirectional media content into a plurality of sub-region contents, wherein a field-of-view of each sub-region content covers at least partly different regions of the 360-degree omnidirectional media content such that combined field-of-views of the plurality of sub-region contents cover the 360-degree omnidirectional media content; means for cropping each of the plurality of sub-region contents into a corresponding viewport; means for encoding each of the cropped plurality of sub-region contents into a sub-media stream having the corresponding viewport and comprising metadata relating to the sub-region; means for receiving, from a client, signaling regarding parameters of a field-of-view to be used in rendering of the 360-degree omnidirectional media content; and means for streaming the sub-media stream having the viewport corresponding to said parameters of the field-of-view to the client.

According to an embodiment, said 360-degree omnidirectional media content is a 360-degree equirectangular projection of the media content and said sub-region contents comprise left, front, right, back, top and bottom regions of the 360-degree equirectangular projection.

According to an embodiment, the apparatus comprises means for resampling the top and the bottom regions of the 360-degree equirectangular projection to same resolution with the left, front, right, and back regions of the 360-degree equirectangular projection.

According to an embodiment, the field-of-view of each sub-region content overlaps with the field-of-views of each of the four neighbouring sub-region contents.

According to an embodiment, the plurality of encoded sub-media streams have the same resolution.

According to an embodiment, the apparatus comprises means for providing each of the plurality of sub-region contents with a unique identifier.

According to an embodiment, said means for encoding comprises means for synchronizing the encoding between the plurality of sub-media streams in terms of time and encoding mode.

According to an embodiment, the apparatus comprises means for switching, based on the signalling indicating that the parameters of the field-of-view of the client being changed, the streaming to another sub-media stream having the viewport corresponding to said changed parameters of the field-of-view.

According to an embodiment, switching between two sub-media streams is configured to be performed at co-located intra coded frame or Instantaneous Decoding Refresh (IDR) frames of said two sub-media streams.

According to an embodiment, the streaming to said another sub-media stream is configured to continue without interruptions after said switching.

According to an embodiment, said apparatus is a streaming server.

According to an embodiment, one or more of said means are distributed among a plurality of network entities.

According to a second aspect, there a provided an apparatus comprising at least one processor and at least one memory, said at least one memory stored with computer program code thereon, the at least one memory and the computer program code configured to, with the at least one processor, cause the apparatus at least to perform: obtain 360-degree omnidirectional media content; divide the 360-degree omnidirectional media content into a plurality of sub-region contents, wherein a field-of-view of each sub-region content covers at least partly different regions of the 360-degree omnidirectional media content such that combined field-of-views of the plurality of sub-region contents cover the 360-degree omnidirectional media content; crop each of the plurality of sub-region contents into a corresponding viewport; encode each of the cropped plurality of sub-region contents into a sub-media stream having the corresponding viewport and comprising metadata relating to the sub-region; receive, from a client, signaling regarding parameters of a field-of-view to be used in rendering of the 360-degree omnidirectional media content; and stream the sub-media stream having the viewport corresponding to said parameters of the field-of-view to the client.

A method according to a third aspect comprises obtaining 360-degree omnidirectional media content; dividing the 360-degree omnidirectional media content into a plurality of sub-region contents, wherein a field-of-view of each sub-region content covers at least partly different regions of the 360-degree omnidirectional media content such that combined field-of-views of the plurality of sub-region contents cover the 360-degree omnidirectional media content; cropping each of the plurality of sub-region contents into a corresponding viewport; encoding each of the cropped plurality of sub-region contents into a sub-media stream having the corresponding viewport and comprising metadata relating to the sub-region; receiving, from a client, signaling regarding parameters of a field-of-view to be used in rendering of the 360-degree omnidirectional media content; and streaming the sub-media stream having the viewport corresponding to said parameters of the field-of-view to the client.

The further aspects relate to apparatuses and computer readable storage media stored with code thereon, which are arranged to carry out the above methods and one or more of the embodiments related thereto.

### BRIEF DESCRIPTION OF THE DRAWINGS

For better understanding of the present invention, reference will now be made by way of example to the accompanying drawings in which:
Figure 1 shows schematically an example of a multi-camera system as a simplified block diagram;
Figure 2 shows a perspective view of a multi-camera system suitable for employing embodiments of the invention;
Figures 3a and 3b show schematically an encoder and a decoder suitable for implementing embodiments of the invention;
Figure 4 shows an example of MPEG Omnidirectional Media Format (OMAF) concept;
Figures 5a and 5b show two alternative methods for packing stereoscopic 360-degree video content into 2D packed pictures for encoding;
Figure 6 shows the process of forming a monoscopic equirectangular panorama;
Figure 7 shows a flow chart of an encoding method according to an embodiment of the invention;
Figure 8 shows an example of splitting a full 360-degree ERP picture in six overlapping sub-regions of the same size according to an embodiment of the invention;
Figure 9 shows center positions of the sub-regions according to an embodiment of the invention;
Figures 10a and 10b show examples of mapping decoded sub-regions of an ERP picture into a full resolution frame;
Figure 11 shows an exemplifying block chart of a sender pipeline (XR server) implementation according to an embodiment of the invention;
Figure 12 shows an exemplifying block chart of a sender pipeline (XR server) implementation according to another embodiment of the invention;
Figure 13 shows an XR server implementation in a distributed environment according to another embodiment of the invention; and
Figure 14 shows a schematic diagram of an example multimedia communication system within which various embodiments may be implemented.

### DETAILED DESCRIPTON OF SOME EXAMPLE EMBODIMENTS

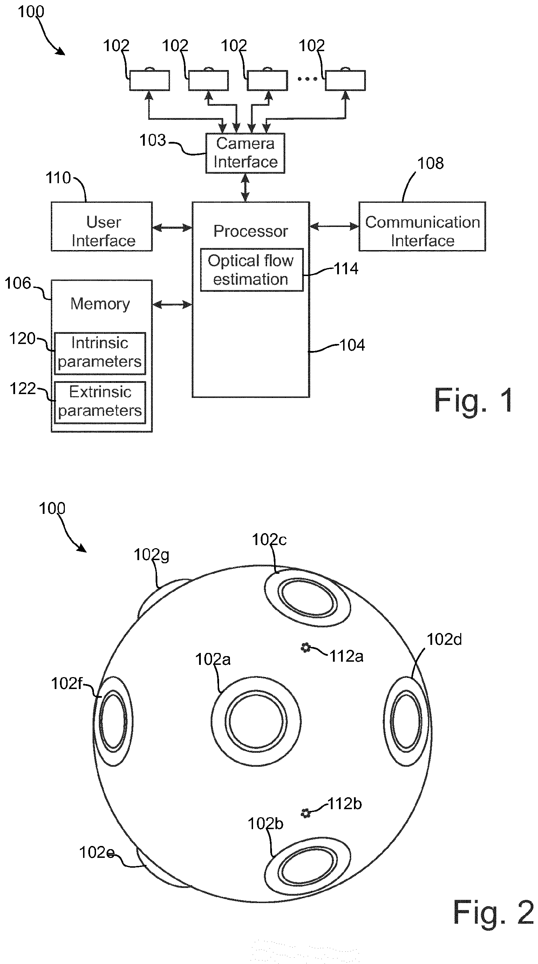

The following describes in further detail suitable apparatus and possible mechanisms for controlling the viewport adaptive streaming in a 360-degree camera device. In this regard reference is first made to Figures 1 and 2, where Figure 1 shows a block diagram of a multi-camera system according to an example embodiment. Figure 2 shows an exemplified layout of an multi-camera system. The elements of Figs. 1 and 2 will be explained next.

Figure 1 illustrates an example of a multi-camera system 100, which may be able to capture and produce 360 degree stereo panorama video. The multi-camera system 100 comprises two or more camera units 102. In this example, the number of camera units 102 is eight, but may also be less than eight or more than eight. Each camera unit 102 is located at a different location in the multi-camera system, and may have a different orientation with respect to other camera units 102, so that they may capture a part of the 360 degree scene from different viewpoints substantially simultaneously. A pair of camera units 102 of the multi-camera system 100 may correspond with left and right eye viewpoints at a time. As an example, the camera units 102 may have an omnidirectional constellation, so that it has a 360° viewing angle in a 3D-space. In other words, such multi-camera system 100 may be able to see each direction of a scene so that each spot of the scene around the multi-camera system 100 can be viewed by at least one camera unit 102 or a pair of camera units 102.

Without losing generality, any two camera units 102 of the multi-camera system 100 may be regarded as a pair of camera units 102. Hence, a multi-camera system of two cameras may have only one pair of camera units, a multi-camera system of three cameras may have three pairs of camera units, a multi-camera system of four cameras may have six pairs of camera units, etc. Generally, a multi-camera system 100 comprising N camera units 102, where N is an integer greater than one, may have N(N-1)/2 pairs of camera units 102. Accordingly, images captured by the camera units 102 at a certain time may be considered as N(N-1)/2 pairs of captured images.

The multi-camera system 100 of Figure 1 may also comprise a processor 104 for controlling the operations of the multi-camera system 100. There may also be a memory 106 for storing data and computer code to be executed by the processor 104, and a transceiver 108 for communicating with, for example, a communication network and/or other devices in a wireless and/or wired manner. The multi-camera system 100 may further comprise a user interface (UI) 110 for displaying information to the user, for generating audio signals, and/or for receiving user inputs. However, the multi-camera system 100 need not comprise each feature mentioned above, or may comprise other features as well. For example, there may be electric and/or mechanical elements for adjusting and/or controlling optics of the camera units 102.

Figure 1 also illustrates some operational elements which may be implemented, for example, as a computer code which can be executed in the processor 104, in hardware, or both to perform a desired function. An optical flow estimation 114 may perform optical flow estimation to for pair of images of different camera units 102. Transform vectors or other information indicative of an amount interpolation/extrapolation to be applied to different parts of a viewport may have been stored into the memory 106 or they may be calculated e.g. as a function of the location of a pixel in question. The operation of the elements will be described later in more detail. It should be noted that there may also be other operational elements in the multi-camera system 100 than those depicted in Figure 1.

Figure 2 shows a perspective view of the multi-camera system 100, in accordance with an embodiment. In Figure 2, seven camera units 102a-102g can be seen, but the multi-camera system 100 may comprise even more camera units which are not visible from this perspective view. Figure 2 also shows two microphones 112a, 112b, but the apparatus may also comprise one microphone or more than two microphones.

In accordance with an embodiment, the multi-camera system 100 may be controlled by another device, wherein the multi-camera system 100 and the other device may communicate with each other and a user may use a user interface of the other device for entering commands, parameters, etc. and the user may be provided with information from the multi-camera system 100 via the user interface of the other device.

Some terminology regarding the multi-camera system 100 will now be shortly described. A viewport is a part of the scene which is displayed e.g. by a head mounted display at a time. It is noted that the viewport may also be displayed by conventional monitors, i.e. displaying only zoomed-in or a bit zoomed-out viewport from whole 360 video. Both left and right eye images may have overlapping, but slightly different viewports. A camera space, or camera coordinates, stands for a coordinate system of an individual camera unit 102 whereas a world space, or world coordinates, stands for a coordinate system of the multi-camera system 100 as a whole. An optical flow may be used to describe how objects, surfaces, and edges in a visual scene move or transform, when an observing point moves between from a location of one camera to a location of another camera. In some embodiments, there need not be any actual movement but it may virtually be determined how the view of the scene might change when a viewing point is moved from one camera unit to another camera unit.

A video codec consists of an encoder that transforms the input video into a compressed representation suited for storage/transmission and a decoder that can uncompress the compressed video representation back into a viewable form. A video encoder and/or a video decoder may also be separate from each other, i.e. need not form a codec. Typically encoder discards some information in the original video sequence in order to represent the video in a more compact form (that is, at lower bitrate).

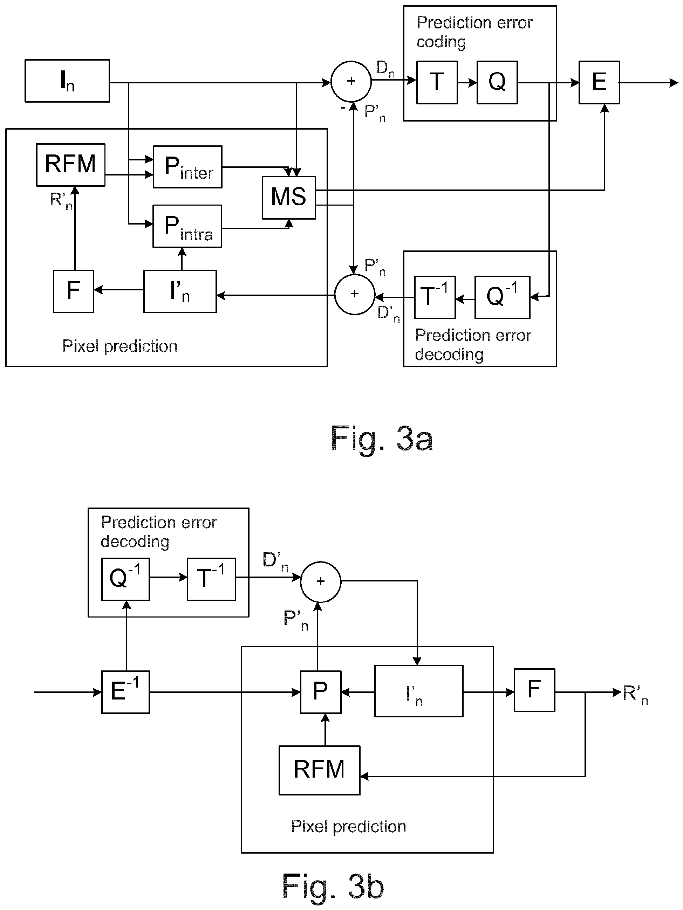

Figures 3a and 3b show an encoder and decoder for encoding and decoding the 2D pictures. A video codec consists of an encoder that transforms an input video into a compressed representation suited for storage/transmission and a decoder that can uncompress the compressed video representation back into a viewable form. Typically, the encoder discards and/or loses some information in the original video sequence in order to represent the video in a more compact form (that is, at lower bitrate).

An example of an encoding process is illustrated in Figure 3a. Figure 3a illustrates an image to be encoded (In); a predicted representation of an image block (P'n); a prediction error signal (Dn); a reconstructed prediction error signal (D'n); a preliminary reconstructed image (I'n); a final reconstructed image (R'n); a transform (T) and inverse transform (T-1); a quantization (Q) and inverse quantization (Q-1); entropy encoding (E); a reference frame memory (RFM); inter prediction (Pinter); intra prediction (Pintra); mode selection (MS) and filtering (F).

An example of a decoding process is illustrated in Figure 3b. Figure 3b illustrates a predicted representation of an image block (P'n); a reconstructed prediction error signal (D'n); a preliminary reconstructed image (I'n); a final reconstructed image (R'n); an inverse transform (T-1); an inverse quantization (Q-1); an entropy decoding (E-1); a reference frame memory (RFM); a prediction (either inter or intra) (P); and filtering (F).

Thus, the decoder reconstructs the output video by applying prediction means similar to the encoder to form a predicted representation of the pixel blocks (using the motion or spatial information created by the encoder and stored in the compressed representation) and prediction error decoding (inverse operation of the prediction error coding recovering the quantized prediction error signal in spatial pixel domain). After applying prediction and prediction error decoding means the decoder sums up the prediction and prediction error signals (pixel values) to form the output video frame. The decoder (and encoder) can also apply additional filtering means to improve the quality of the output video before passing it for display and/or storing it as prediction reference for the forthcoming frames in the video sequence. The filtering may for example include one more of the following: deblocking, sample adaptive offset (SAO), and/or adaptive loop filtering (ALF).

Many hybrid video encoders, such as H.264/AVC encoders, High Efficiency Video Coding (H.265/HEVC a.k.a. HEVC) and Versatile Video Coding (H.266/WC a.k.a. VVC) encoders, encode the video information in two phases. Firstly pixel values in a certain picture area (or "block") are predicted for example by motion compensation means (finding and indicating an area in one of the previously coded video frames that corresponds closely to the block being coded) or by spatial means (using the pixel values around the block to be coded in a specified manner). Secondly the prediction error, i.e. the difference between the predicted block of pixels and the original block of pixels, is coded. This is typically done by transforming the difference in pixel values using a specified transform (e.g. Discrete Cosine Transform (DCT) or a variant of it), quantizing the coefficients and entropy coding the quantized coefficients. By varying the fidelity of the quantization process, encoder can control the balance between the accuracy of the pixel representation (picture quality) and size of the resulting coded video representation (file size or transmission bitrate). Video codecs may also provide a transform skip mode, which the encoders may choose to use. In the transform skip mode, the prediction error is coded in a sample domain, for example by deriving a sample-wise difference value relative to certain adjacent samples and coding the sample-wise difference value with an entropy coder.

In temporal prediction, the sources of prediction are previously decoded pictures (a.k.a. reference pictures). In intra block copy (IBC; a.k.a. intra-block-copy prediction), prediction is applied similarly to temporal prediction but the reference picture is the current picture and only previously decoded samples can be referred in the prediction process. Inter-layer or inter-view prediction may be applied similarly to temporal prediction, but the reference picture is a decoded picture from another scalable layer or from another view, respectively. In some cases, inter prediction may refer to temporal prediction only, while in other cases inter prediction may refer collectively to temporal prediction and any of intra block copy, inter-layer prediction, and inter-view prediction provided that they are performed with the same or similar process than temporal prediction. Inter prediction or temporal prediction may sometimes be referred to as motion compensation or motion-compensated prediction.

Inter prediction, which may also be referred to as temporal prediction, motion compensation, or motion-compensated prediction, reduces temporal redundancy. In inter prediction the sources of prediction are previously decoded pictures. Intra prediction utilizes the fact that adjacent pixels within the same picture are likely to be correlated. Intra prediction can be performed in spatial or transform domain, i.e., either sample values or transform coefficients can be predicted. Intra prediction is typically exploited in intra coding, where no inter prediction is applied.

In many video codecs, including H.264/AVC, HEVC and VVC, motion information is indicated by motion vectors associated with each motion compensated image block. Each of these motion vectors represents the displacement of the image block in the picture to be coded (in the encoder) or decoded (at the decoder) and the prediction source block in one of the previously coded or decoded images (or picture).

One outcome of the coding procedure is a set of coding parameters, such as motion vectors and quantized transform coefficients. Many parameters can be entropy-coded more efficiently if they are predicted first from spatially or temporally neighboring parameters. For example, a motion vector may be predicted from spatially adjacent motion vectors and only the difference relative to the motion vector predictor may be coded. Prediction of coding parameters and intra prediction may be collectively referred to as in-picture prediction.

The H.264/AVC standard was developed by the Joint Video Team (JVT) of the Video Coding Experts Group (VCEG) of the Telecommunications Standardization Sector of International Telecommunication Union (ITU-T) and the Moving Picture Experts Group (MPEG) of International Organisation for Standardization (ISO) / International Electrotechnical Commission (IEC). The H.264/AVC standard is published by both parent standardization organizations, and it is referred to as ITU-T Recommendation H.264 and ISO/IEC International Standard 14496-10, also known as MPEG-4 Part 10 Advanced Video Coding (AVC). Extensions of the H.264/AVC include Scalable Video Coding (SVC) and Multiview Video Coding (MVC).

High Efficiency Video Coding (H.265/HEVC a.k.a. HEVC) standard was developed by the Joint Collaborative Team - Video Coding (JCT-VC) of VCEG and MPEG. The standard was published by both parent standardization organizations, and it is referred to as ITU-T Recommendation H.265 and ISO/IEC International Standard 23008-2, also known as MPEG-H Part 2 High Efficiency Video Coding (HEVC). Later versions of H.265/HEVC included scalable, multiview, fidelity range, three-dimensional, and screen content coding extensions which may be abbreviated SHVC, MV-HEVC, REXT, 3D-HEVC, and SCC, respectively.

Versatile Video Coding (H.266 a.k.a. VVC), defined in ITU-T Recommendation H.266 and equivalently in ISO/IEC 23090-3, (also referred to as MPEG-I Part 3) is a video compression standard developed as the successor to HEVC.

Some key definitions, bitstream and coding structures, and concepts of VVC, especially regarding the picture partitioning, are described in this section as an example of a platform, where the embodiments may be implemented. Some of the key definitions, bitstream and coding structures, and concepts of H.266/VVC are the same as in H.264/AVC and. The embodiments are not limited to H.266/VVC, but rather the description is given for one possible basis on top of which the aspects of the invention and the related embodiments may be partly or fully realized.

An elementary unit for the input to an encoder and the output of a decoder, respectively, in most cases is a picture. A picture given as an input to an encoder may also be referred to as a source picture, and a picture decoded by a decoder may be referred to as a decoded picture or a reconstructed picture.

The source and decoded pictures are each comprises of one or more sample arrays, such as one of the following sets of sample arrays:
- Luma (Y) only (monochrome),
- Luma and two chroma (YCbCr or YCgCo),
- Green, Blue and Red (GBR, also known as RGB),
- Arrays representing other unspecified monochrome or tri-stimulus color samplings (for example, YZX, also known as XYZ).

In the following, these arrays may be referred to as luma (or L or Y) and chroma, where the two chroma arrays may be referred to as Cb and Cr; regardless of the actual color representation method in use. The actual color representation method in use can be indicated e.g. in a coded bitstream e.g. using the Video Usability Information (VUI) syntax of HEVC or alike. A component may be defined as an array or single sample from one of the three sample arrays (luma and two chroma) that compose a picture e.g. in 4:2:0, 4:2:2 or 4:4:4 chroma format or the array or a single sample of the array that compose a picture in monochrome format.

A picture may be defined to be either frame or a field. A frame comprises a matrix of luma samples and possibly the corresponding chroma samples. A field is a set of alternate sample rows of a frame and may be used as encoder input, when the source signal is interlaced. Chroma sample arrays may be absent (and hence monochrome sampling may be in use) or chroma sample arrays may be subsampled when compared to luma sample arrays.

Some chroma formats (a.k.a color formats) may be summarized as follows:
- In monochrome sampling there is only one sample array, which may be nominally considered the luma array.
- In 4:2:0 sampling, each of the two chroma arrays has half the height and half the width of the luma array.
- In 4:2:2 sampling, each of the two chroma arrays has the same height and half the width of the luma array.
- In 4:4:4 sampling when no separate color planes are in use, each of the two chroma arrays has the same height and width as the luma array.

Partitioning may be defined as a division of a set into subsets such that each element of the set is in exactly one of the subsets.

In the following, partitioning a picture into subpictures, slices, and tiles according to H.266/VVC is described more in detail.

A picture is divided into one or more tile rows and one or more tile columns. A tile is a sequence of coding tree units (CTU) that covers a rectangular region of a picture. The CTUs in a tile are scanned in raster scan order within that tile.

A slice consists of an integer number of complete tiles or an integer number of consecutive complete CTU rows within a tile of a picture. Consequently, each vertical slice boundary is always also a vertical tile boundary. It is possible that a horizontal boundary of a slice is not a tile boundary but consists of horizontal CTU boundaries within a tile; this occurs when a tile is split into multiple rectangular slices, each of which consists of an integer number of consecutive complete CTU rows within the tile.

Two modes of slices are supported, namely the raster-scan slice mode and the rectangular slice mode. In the raster-scan slice mode, a slice contains a sequence of complete tiles in a tile raster scan of a picture. In the rectangular slice mode, a slice contains either a number of complete tiles that collectively form a rectangular region of the picture or a number of consecutive complete CTU rows of one tile that collectively form a rectangular region of the picture. Tiles within a rectangular slice are scanned in tile raster scan order within the rectangular region corresponding to that slice.

A syntax element may be defined as an element of data represented in the bitstream. A syntax structure may be defined as zero or more syntax elements present together in the bitstream in a specified order.

A NAL unit may be defined as a syntax structure containing an indication of the type of data to follow and bytes containing that data in the form of an RBSP interspersed as necessary with start code emulation prevention bytes. A raw byte sequence payload (RBSP) may be defined as a syntax structure containing an integer number of bytes that is encapsulated in a NAL unit. An RBSP is either empty or has the form of a string of data bits containing syntax elements followed by an RBSP stop bit and followed by zero or more subsequent bits equal to 0.

NAL units consist of a header and payload. The NAL unit header indicates the type of the NAL unit among other things.

NAL units can be categorized into Video Coding Layer (VCL) NAL units and non-VCL NAL units. VCL NAL units are typically coded slice NAL units.

A non-VCL NAL unit may be for example one of the following types: a sequence parameter set, a picture parameter set, a supplemental enhancement information (SEI) NAL unit, an access unit delimiter, an end of sequence NAL unit, an end of bitstream NAL unit, or a filler data NAL unit. Parameter sets may be needed for the reconstruction of decoded pictures, whereas many of the other non-VCL NAL units are not necessary for the reconstruction of decoded sample values.

Some coding formats specify parameter sets that may carry parameter values needed for the decoding or reconstruction of decoded pictures. A parameter may be defined as a syntax element of a parameter set. A parameter set may be defined as a syntax structure that contains parameters and that can be referred to from or activated by another syntax structure for example using an identifier.

Some types of parameter sets are briefly described in the following but it needs to be understood that other types of parameter sets may exist and that embodiments may be applied but are not limited to the described types of parameter sets. A video parameter set (VPS) may include parameters that are common across multiple layers in a coded video sequence or describe relations between layers. Parameters that remain unchanged through a coded video sequence (in a single-layer bitstream) or in a coded layer video sequence may be included in a sequence parameter set (SPS). In addition to the parameters that may be needed by the decoding process, the sequence parameter set may optionally contain video usability information (VUI), which includes parameters that may be important for buffering, picture output timing, rendering, and resource reservation. A picture parameter set (PPS) contains such parameters that are likely to be unchanged in several coded pictures. A picture parameter set may include parameters that can be referred to by the coded image segments of one or more coded pictures. A header parameter set (HPS) has been proposed to contain such parameters that may change on picture basis. In VVC, an Adaptation Parameter Set (APS) may comprise parameters for decoding processes of different types, such as adaptive loop filtering or luma mapping with chroma scaling.

A parameter set may be activated when it is referenced e.g., through its identifier. For example, a header of an image segment, such as a slice header, may contain an identifier of the PPS that is activated for decoding the coded picture containing the image segment. A PPS may contain an identifier of the SPS that is activated, when the PPS is activated. An activation of a parameter set of a particular type may cause the deactivation of the previously active parameter set of the same type. Instead of explicitly activating and deactivating parameter sets, the syntax element values of a parameter set may be used in the (de)coding process when the parameter set is referenced e.g. through its identifier, similarly as explained above regarding parameter set activation.

An adaptation parameter set (APS) may be defined as a syntax structure that applies to zero or more slices. There may be different types of adaptation parameter sets. An adaptation parameter set may for example contain filtering parameters for a particular type of a filter. In VVC, three types of APSs are specified carrying parameters for one of: adaptive loop filter (ALF), luma mapping with chroma scaling (LMCS), and scaling lists. A scaling list may be defined as a list that associates each frequency index with a scale factor for the scaling process, which multiplies transform coefficient levels by a scaling factor, resulting in transform coefficients. In VVC, an APS is referenced through its type (e.g. ALF, LMCS, or scaling list) and an identifier. In other words, different types of APSs have their own identifier value ranges.

Instead of or in addition to parameter sets at different hierarchy levels (e.g., sequence and picture), video coding formats may include header syntax structures, such as a sequence header or a picture header. A sequence header may precede any other data of the coded video sequence in the bitstream order. A picture header may precede any coded video data for the picture in the bitstream order.

In VVC, a picture header (PH) may be defined as a syntax structure containing syntax elements that apply to all slices of a coded picture. In other words, contains information that is common for all slices of the coded picture associated with the PH. A picture header syntax structure is specified as an RBSP and is contained in a NAL unit.

A bitstream may be defined as a sequence of bits, which may in some coding formats or standards be in the form of a NAL unit stream or a byte stream, that forms the representation of coded pictures and associated data forming one or more coded video sequences. A first bitstream may be followed by a second bitstream in the same logical channel, such as in the same file or in the same connection of a communication protocol. An elementary stream (in the context of video coding) may be defined as a sequence of one or more bitstreams. In some coding formats or standards, the end of the first bitstream may be indicated by a specific NAL unit, which may be referred to as the end of bitstream (EOB) NAL unit and which is the last NAL unit of the bitstream.

The phrase along the bitstream (e.g. indicating along the bitstream) or along a coded unit of a bitstream (e.g. indicating along a coded tile) may be used in claims and described embodiments to refer to transmission, signaling, or storage in a manner that the "out-of-band" data is associated with but not included within the bitstream or the coded unit, respectively. The phrase decoding along the bitstream or along a coded unit of a bitstream or alike may refer to decoding the referred out-of-band data (which may be obtained from out-of-band transmission, signaling, or storage) that is associated with the bitstream or the coded unit, respectively. For example, the phrase along the bitstream may be used when the bitstream is contained in a container file, such as a file conforming to the ISO Base Media File Format, and certain file metadata is stored in the file in a manner that associates the metadata to the bitstream, such as boxes in the sample entry for a track containing the bitstream, a sample group for the track containing the bitstream, or a timed metadata track associated with the track containing the bitstream.

A coded video sequence (CVS) may be defined as such a sequence of coded pictures in decoding order that is independently decodable and is followed by another coded video sequence or the end of the bitstream. A coded video sequence may additionally or alternatively be specified to end, when a specific NAL unit, which may be referred to as an end of sequence (EOS) NAL unit, appears in the bitstream.

Media coding standards may specify "profiles" and "levels." A profile may be defined as a subset of algorithmic features of the standard (of the encoding algorithm or the equivalent decoding algorithm). In another definition, a profile is a specified subset of the syntax of the standard (and hence implies that the encoder may only use features that result into a bitstream conforming to that specified subset and the decoder may only support features that are enabled by that specified subset).

A level may be defined as a set of limits to the coding parameters that impose a set of constraints in decoder resource consumption. In another definition, a level is a defined set of constraints on the values that may be taken by the syntax elements and variables of the standard. These constraints may be simple limits on values. Alternatively, or in addition, they may take the form of constraints on arithmetic combinations of values (e.g., picture width multiplied by picture height multiplied by number of pictures decoded per second). Other means for specifying constraints for levels may also be used. Some of the constraints specified in a level may for example relate to the maximum picture size, maximum bitrate and maximum data rate in terms of coding units, such as macroblocks, per a time period, such as a second. The same set of levels may be defined for all profiles. It may be preferable for example to increase interoperability of terminals implementing different profiles that most or all aspects of the definition of each level may be common across different profiles.

Virtual reality is a rapidly developing area of technology in which image or video content, sometimes accompanied by audio, is provided to a user device such as a user headset (a.k.a. head-mounted display, HMD). As is known, the user device may be provided with a live or stored feed from a content source, the feed representing a virtual space for immersive output through the user device.

Terms 360-degree video or virtual reality (VR) video may sometimes be used interchangeably. They may generally refer to video content that provides such a large field of view that only a part of the video is displayed at a single point of time in typical displaying arrangements. For example, VR video may be viewed on a head-mounted display (HMD) that may be capable of displaying e.g. about 100-degree field of view. The spatial subset of the VR video content to be displayed may be selected based on the orientation of the HMD. In another example, a typical flat-panel viewing environment is assumed, wherein e.g. up to 40-degree field-of-view may be displayed. When displaying wide-FOV content (e.g. fisheye) on such a display, it may be preferred to display a spatial subset rather than the entire picture.

A coordinate system suitable for 360-degree images and/or video may be defined as follows. The coordinate system consists of a unit sphere and three coordinate axes, namely the X (back-to-front) axis, the Y (lateral, side-to-side) axis, and the Z (vertical, up) axis, where the three axes cross at the centre of the sphere. The location of a point on the sphere is identified by a pair of sphere coordinates azimuth (ϕ) and elevation (0), where the azimuth may represent rotation around the Z-axis and the elevation may represent rotation around the Y-axis or the X-axis. The value range of azimuth may be defined to be -180.0, inclusive, to 180.0, exclusive, degrees. The value range of elevation may be defined to be -90.0 to 90.0, inclusive, degrees. Alternatively, other ranges can be used, e.g. 0.0 to 360.0 (angular) degree for azimuth, and 0.0 to 180.0 (angular) degree for elevation, as long as the ranges are within the 360.0 horizontally and 180.0 vertically.

MPEG Omnidirectional Media Format (ISO/IEC 23090-2) is a virtual reality (VR) system standard. OMAF defines a media format (comprising both file format derived from ISOBMFF and streaming formats for DASH and MPEG Media Transport). OMAF supports 360° video, images, and audio, as well as the associated timed text and facilitates three degrees of freedom (3DoF) content consumption, meaning that a viewport can be selected with any azimuth and elevation range and tilt angle that are covered by the omnidirectional content but the content is not adapted to any translational changes of the viewing position.

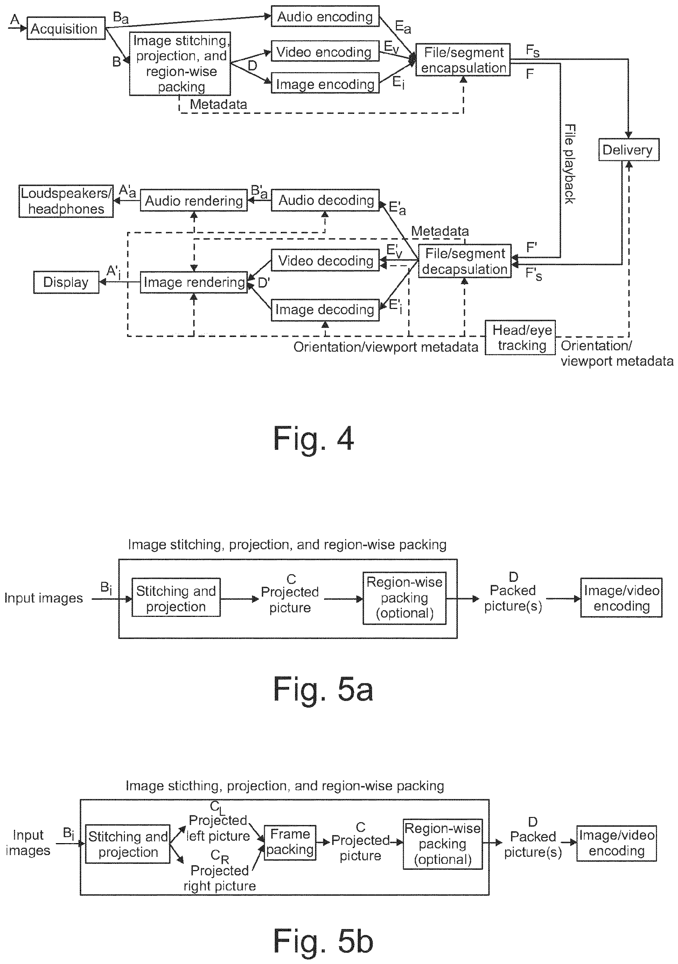

MPEG Omnidirectional Media Format (OMAF) is described in the following by referring to Figure 4. A real-world audio-visual scene (A) is captured by audio sensors as well as a set of cameras or a camera device with multiple lenses and sensors. The acquisition results in a set of digital image/video (Bi) and audio (Ba) signals. The cameras/lenses typically cover all directions around the center point of the camera set or camera device, thus the name of 360-degree video.

Audio can be captured using many different microphone configurations and stored as several different content formats, including channel-based signals, static or dynamic (i.e. moving through the 3D scene) object signals, and scene-based signals (e.g., Higher Order Ambisonics). The channel-based signals typically conform to one of the loudspeaker layouts defined in CICP. In an omnidirectional media application, the loudspeaker layout signals of the rendered immersive audio program are binaraulized for presentation via headphones.

The images (Bi) of the same time instance are stitched, projected, and mapped onto a packed picture (D).

For monoscopic 360-degree video, the input images of one time instance are stitched to generate a projected picture representing one view. The breakdown of image stitching, projection, and region-wise packing process for monoscopic content is illustrated with Figure 5a and described as follows. Input images (Bi) are stitched and projected onto a three-dimensional projection structure that may for example be a unit sphere. The projection structure may be considered to comprise one or more surfaces, such as plane(s) or part(s) thereof. A projection structure may be defined as three-dimensional structure consisting of one or more surface(s) on which the captured VR image/video content is projected, and from which a respective projected picture can be formed. The image data on the projection structure is further arranged onto a two-dimensional projected picture (C). The term projection may be defined as a process by which a set of input images are projected onto a projected frame. There may be a pre-defined set of representation formats of the projected picture, including for example an equirectangular projection (ERP) format and a cube map projection (CMP) format. It may be considered that the projected picture covers the entire sphere.

Optionally, region-wise packing is then applied to map the projected picture onto a packed picture. If the region-wise packing is not applied, the packed picture is identical to the projected picture, and this picture is given as input to image/video encoding. Otherwise, regions of the projected picture are mapped onto a packed picture (D) by indicating the location, shape, and size of each region in the packed picture, and the packed picture (D) is given as input to image/video encoding. The term region-wise packing may be defined as a process by which a projected picture is mapped to a packed picture. The term packed picture may be defined as a picture that results from region-wise packing of a projected picture.

In the case of stereoscopic 360-degree video, the input images of one time instance are stitched to generate a projected picture representing two views, one for each eye. Both views can be mapped onto the same packed picture, as described below in relation to the Figure 5b, and encoded by a traditional 2D video encoder. Alternatively, each view of the projected picture can be mapped to its own packed picture, in which case the image stitching, projection, and region-wise packing is like described above with the Figure 5a. A sequence of packed pictures of either the left view or the right view can be independently coded or, when using a multiview video encoder, predicted from the other view.

The breakdown of image stitching, projection, and region-wise packing process for stereoscopic content where both views are mapped onto the same packed picture is illustrated with the Figure 5b and described as follows. Input images (Bi) are stitched and projected onto two three-dimensional projection structures, one for each eye. The image data on each projection structure is further arranged onto a two-dimensional projected picture (C_{L} for left eye, C_{R} for right eye), which covers the entire sphere. Frame packing is applied to pack the left view picture and right view picture onto the same projected picture. Optionally, region-wise packing is then applied to the pack projected picture onto a packed picture, and the packed picture (D) is given as input to image/video encoding. If the region-wise packing is not applied, the packed picture is identical to the projected picture, and this picture is given as input to image/video encoding.

The image stitching, projection, and region-wise packing process can be carried out multiple times for the same source images to create different versions of the same content, e.g. for different orientations of the projection structure. Similarly, the region-wise packing process can be performed multiple times from the same projected picture to create more than one sequence of packed pictures to be encoded.

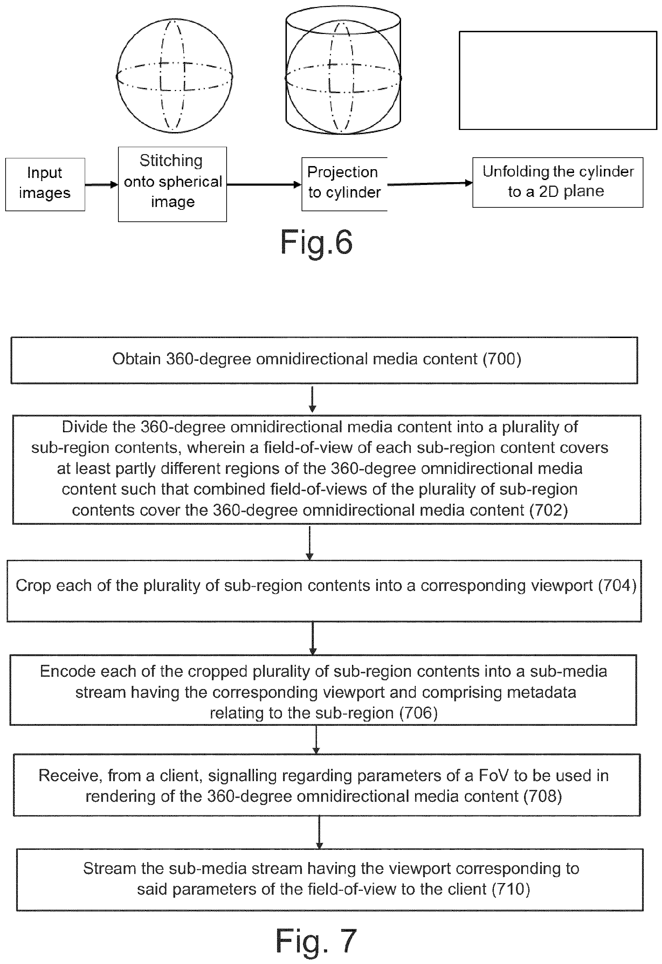

360-degree panoramic content (i.e., images and video) cover horizontally the full 360-degree field-of-view around the capturing position of an imaging device. The vertical field-of-view may vary and can be e.g. 180 degrees. Panoramic image covering 360-degree field-of-view horizontally and 180-degree field-of-view vertically can be represented by a sphere that can be mapped to a bounding cylinder that can be cut vertically to form a 2D picture (this type of projection is known as equirectangular projection). The process of forming a monoscopic equirectangular panorama picture is illustrated in Figure 6. A set of input images, such as fisheye images of a camera array or a camera device with multiple lenses and sensors, is stitched onto a spherical image. The spherical image is further projected onto a cylinder (without the top and bottom faces). The cylinder is unfolded to form a two-dimensional projected frame. In practice one or more of the presented steps may be merged; for example, the input images may be directly projected onto a cylinder without an intermediate projection onto a sphere. The projection structure for equirectangular panorama may be considered to be a cylinder that comprises a single surface.

In general, 360-degree content can be mapped onto different types of solid geometrical structures, such as polyhedron (i.e. a three-dimensional solid object containing flat polygonal faces, straight edges and sharp corners or vertices, e.g., a cube or a pyramid), cylinder (by projecting a spherical image onto the cylinder, as described above with the equirectangular projection), cylinder (directly without projecting onto a sphere first), cone, etc. and then unwrapped to a two-dimensional image plane.

In some cases panoramic content with 360-degree horizontal field-of-view but with less than 180-degree vertical field-of-view may be considered special cases of panoramic projection, where the polar areas of the sphere have not been mapped onto the two-dimensional image plane. In some cases a panoramic image may have less than 360-degree horizontal field-of-view and up to 180-degree vertical field-of-view, while otherwise has the characteristics of panoramic projection format.

OMAF allows the omission of image stitching, projection, and region-wise packing and encode the image/video data in their captured format. In this case, images D are considered the same as images Bi and a limited number of fisheye images per time instance are encoded.

For audio, the stitching process is not needed, since the captured signals are inherently immersive and omnidirectional.

The stitched images (D) are encoded as coded images (Ei) or a coded video bitstream (Ev). The captured audio (Ba) is encoded as an audio bitstream (Ea). The coded images, video, and/or audio are then composed into a media file for file playback (F) or a sequence of an initialization segment and media segments for streaming (Fs), according to a particular media container file format. In this specification, the media container file format is the ISO base media file format. The file encapsulator also includes metadata into the file or the segments, such as projection and region-wise packing information assisting in rendering the decoded packed pictures.

The metadata in the file may include:
- the projection format of the projected picture,
- fisheye video parameters,
- the area of the spherical surface covered by the packed picture,
- the orientation of the projection structure corresponding to the projected picture relative to the global coordinate axes,
- region-wise packing information, and
- region-wise quality ranking (optional).

The segments Fs are delivered using a delivery mechanism to a player.

The file that the file encapsulator outputs (F) is identical to the file that the file decapsulator inputs (F'). A file decapsulator processes the file (F') or the received segments (F's) and extracts the coded bitstreams (E'a, E'v, and/or E'i) and parses the metadata. The audio, video, and/or images are then decoded into decoded signals (B'a for audio, and D' for images/video). The decoded packed pictures (D') are projected onto the screen of a head-mounted display or any other display device based on the current viewing orientation or viewport and the projection, spherical coverage, projection structure orientation, and region-wise packing metadata parsed from the file. Likewise, decoded audio (B'a) is rendered, e.g. through headphones, according to the current viewing orientation. The current viewing orientation is determined by the head tracking and possibly also eye tracking functionality. Besides being used by the renderer to render the appropriate part of decoded video and audio signals, the current viewing orientation may also be used the video and audio decoders for decoding optimization.

The process described above is applicable to both live and on-demand use cases.

The human eyes are not capable of viewing the whole 360 degrees space, but are limited to a maximum horizontal and vertical FoVs (HHFoV, HVFoV). Also, a HMD device has technical limitations that allow only viewing a subset of the whole 360 degrees space in horizontal and vertical directions (DHFoV, DVFoV)).

At any point of time, a video rendered by an application on a HMD renders a portion of the 360 degrees video. This portion is defined here as viewport. A viewport may be defined as a region of omnidirectional image or video suitable for display and viewing by the user. A current viewport (which may be sometimes referred simply as a viewport) may be defined as the part of the spherical video that is currently displayed and hence is viewable by the user(s). A viewport is a window on the 360-degree world represented in the omnidirectional video displayed via a rendering display. A viewport may be characterized by a horizontal field-of-view (VHFoV) and a vertical field-of-view (WFoV). In the following, the horizontal field-of-view of the viewport will be abbreviated with HFoV and, respectively, the vertical field-of-view of the viewport will be abbreviated with VFoV.

A recent trend in streaming in order to reduce the streaming bitrate of VR video is the following: a subset of 360-degree video content covering the primary viewport (i.e., the current view orientation) is transmitted at the best quality/resolution, while the remaining of 360-degree video is transmitted at a lower quality/resolution. When the viewing orientation changes, e.g. when the user turns his/her head when viewing the content with a head-mounted display, another version of the content needs to be streamed, matching the new viewing orientation.

Use cases for conversational 360-degree video include virtual tourism, remote learning and training, and teleconferencing. Low-latency real-time 360-degree video also has application in the industry for remote vehicles/drones mounted with 360-degree cameras for monitoring and surveillance. Many use cases require video resolutions to be up to 8K (and beyond), which implies the need of high bitrate video delivery that makes it difficult to be delivered in real time over current networks.

Video systems can ease immersive video bandwidth and client computational complexity requirements by using viewport-dependent processing and delivery (VDD), as described above. Therein, the client viewport covers only a part of the full 360-degree immersive video. Thus, the region outside the viewport is never viewed but only contributes to bandwidth and resolution waste. For VDD, the immersive content is encoded in such a way as to allow delivery of only the viewport region at high quality. In a low delay 360-degree video delivery system, the server must receive the FoV (Field-of-View) coordinates from the client, corresponding to the position where the client is looking, then the server creates and encodes the viewport stream to be delivered to the client asap.

Ultra-high resolution video stream, such as 8K and beyond, requires huge bandwidth, even when coded with the latest video codec technologies such as H.265 (HEVC), VP9, and AV1. 8K content requires bitrates from 20Mbps to 150Mbps. 8K streaming requires internet connection speed of at least 50 Mbps in uplink or downlink. Consequently, VDD technology is needed to save the bandwidth with a decent 8K video bitrate.

In 8K VDD streaming mode, the coded picture (viewport or 360 picture with a high-quality viewport region, i.e. region of interest (ROI)) is receiver-independent, that is, it is impossible to deliver different coded picture representing different viewport or viewing directions with respect to the 360-degree space to different receivers. A separate video encoder would be needed for every possible viewport settings from large number of client devices.

Now an improved method and apparatus for enabling scaling up the number of users without significant increase in processing resources are introduced.

The method according to an aspect, as shown in Figure 7 and illustrating the operation of a streaming server or a corresponding cloud-based service, comprises obtaining (700) 360-degree omnidirectional media content; dividing (702) the 360-degree omnidirectional media content into a plurality of sub-region contents, wherein a field-of-view of each sub-region content covers at least partly different regions of the 360-degree omnidirectional media content such that combined field-of-views of the plurality of sub-region contents cover the 360-degree omnidirectional media content; cropping (704) each of the plurality of sub-region contents into a corresponding viewport; encoding (706) each of the cropped plurality of sub-region contents into a sub-media stream having the corresponding viewport and comprising metadata relating to the sub-region; receiving (708), from a client, signalling regarding parameters of a field-of-view to be used in rendering of the 360-degree omnidirectional media content; and streaming (710) the sub-media stream having the viewport corresponding to said parameters of the field-of-view to the client.

Accordingly, the 360-degree omnidirectional media content obtained at a streaming server or alike is split into a plurality of at least partly overlapping sub-region contents. Each of the plurality of sub-region contents is cropped into a corresponding viewport of the 360 degree scene. Then each of the plurality of sub-region contents is encoded by a dedicated encoder into a plurality of sub-media streams. Each sub-media stream may contain metadata relating to the sub-region. Upon receiving a streaming request from a client, such as an HMD, wherein the streaming request comprises at least an identification of the field-of-view (FOV) used currently by the client, the streaming server or alike selects the encoded sub-media stream having the viewport corresponding to the identified FOV and starts streaming it to the client.

Evidently, the number of clients requesting the same sub-media stream is not limited by the processing resources of the media servers, but rather any of the encoded sub-media streams can be streamed to an unlimited number of clients. Hence, only a limited and fixed number of processing resources, such as encoders, are needed to scale up the number of concurrently served clients significantly.

According to an embodiment, said 360-degree omnidirectional media content is a 360-degree equirectangular projection of the media content and said sub-region contents comprise left, front, right, back, top and bottom regions of the 360-degree equirectangular projection.

Splitting the media content into sub-region contents may be carried out in various ways. One typical technique is to project the 360 content (ERP, CubeMap, or any other projections) to the unit sphere first and then create 2D regions from different 3D region surfaces. Other techniques, like rotation, can be applied if needed. Herein, the 360-degree ERP (equirectangular projection) mode, being the most commonly used format for 360 picture and video, may be utilized. The 360-degree ERP picture may be divided in six different regions covering the full 360-degree view with some overlapping between the regions. The regions typically used in splitting the 360-degree EPR picture are referred to as left, front, right, back, top and bottom regions. After cropping and encoding with corresponding encoders, this will create six sub-media streams, also referred herein as Region Video Streams, wherein the combined FOVs of the underlying sub-region contents covers the full 360-degree view.

It is noted that while dividing the 360-degree ERP picture in said six different regions (left, front, right, back, top and bottom) is the most typical approach and therefore used herein as an illustrating example, the number of regions does not have to be limited to six, but more than six regions may be used. Herein, the regions may be divided to pole-area regions and middle area regions, wherein the pole-area regions may comprise at least the top and bottom regions, and the middle area regions may comprise at least the left, front, right, back. However, this can be generalized such that the pole-area regions may comprise a plurality of regions and the middle area regions may comprise a plurality of regions, without limiting the number of neither the pole-area regions nor the middle area regions.

The sub-media stream may contain the region information as in-band metadata, e.g. coded as custom codec SEI NAL unit, or coded using a special color-coded pictures into the frame before encoding. The metadata is mainly for the receiver-side synchronization. That is, the receiver needs to correlate the incoming sub-media stream to the viewport direction .

According to an embodiment, the field-of-view of each sub-region content overlaps with the field-of-views of each of the four neighboring sub-region contents.

Thus, the sub-regions preferably have overlap in both directions, i.e. horizontal and vertical, to each neighboring region to avoid bad visual effects due to lack of pixels in the side of the region. The size of the sub-regions may be configured in such a way that the size of the sub-regions including the overlapping between the sub-regions is preferably bigger than the viewport size.

According to an embodiment, the method comprises re-sampling the top and the bottom sub-regions of the 360-degree equirectangular projection to same resolution with the left, front, right, and back sub-regions of the 360-degree equirectangular projection.

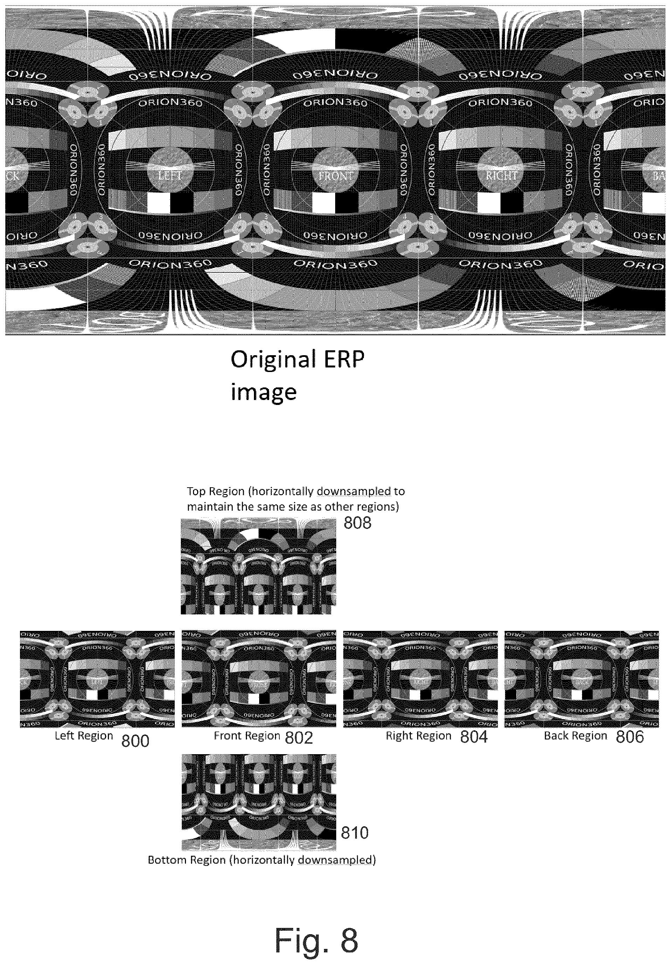

Figure 8 illustrates some of the embodiments relating to splitting a full 360-degree ERP picture in six overlapping sub-regions of the same size. Each region covers 180 degree horizontally and 90 degree vertically. Other number of sub-regions can be alternatively used. The four sub-regions covering the horizontal view (i.e. Left 800, Front 802, Right 804, Back 806) maintain the full original resolution. The two sub-regions covering the top (808) and the bottom (810) parts of the image are horizontally down-sampled to fit the same resolution as the other sub-regions.

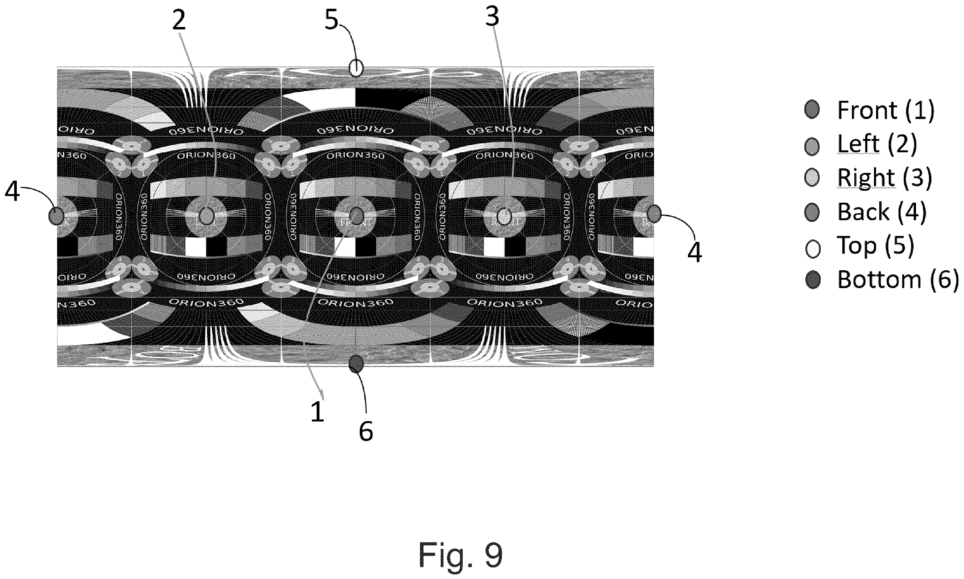

Figure 9 shows the center positions of the sub-regions and color-coded identifiers. The horizontal sub-regions (front, left, right, back) are centered on the positions (1, 2, 3, 4) shown in Figure 9, whereas the top and the bottom sub-regions are dimensioned from the positions (5, 6) shown in Figure 9. The top and the bottom sub-regions include the whole horizontal size of the ERP and a height size similar to the horizontal regions. After cropping to the size of the viewport, the top and the bottom sub-regions are horizontally down-sampled to the width of the horizontal sub-regions. When using the in-band color-coded approach, the color-coded identifier is rendered as a corresponding color block to the sub-region picture. The rendering position is usually around the corner or a place outside the viewport.

According to an embodiment, the plurality of encoded sub-media streams have the same resolution and the same size in horizonal and vertical direction.

Thus, in order to facilitate the operation of the decoder in the client, the frames of all sub-media streams originated from the same ERP preferably have the same size and resolution. The actual region size depends on the size of the viewport (FoV) and the input video resolution (such as 4K, 8K, 12K etc.). Thus, switching between the streams is facilitated and the decoder does not need to adapt to different buffer sizes.

According to an embodiment, the method comprises providing each of the plurality of sub-region contents with a unique identifier.

Prior to streaming an encoded sub-media stream to the client, the sub-region may be provided an identifier such that the client receiving the stream is able to recognize the position of the stream (front, right, left, back, top or bottom) in the original ERP in order to render the viewport and properly display it. The identifier can be signaled in-band, for example, using codec SEI NAL unit, or using frame metadata in so-called color-coded pictures (as shown in Fig. 9), or out-of-band via any real-time transport protocols, such as WebSocket, SocketIO, WebRTC, or direct TCP/UDP protocols. The identifier is delivered to the client for switching identification and synchronization.

According to an embodiment, the method comprises synchronizing the encoding between the plurality of sub-media streams in terms of time and encoding mode.

Thus, the frames of all sub-media streams originated from the same ERP preferably are synchronized at least in terms of time and encoding mode, such as in terms of Group of Pictures (GOP) size, GOP type, and the type of frame. For example, the mutual synchronization of at least intra coded frame or Instantaneous Decoding Refresh (IDR) frames of sub-media streams is vital.

According to an embodiment, the method comprises switching, based on the signalling indicating that the parameters of the field-of-view of the client being changed, the streaming to another sub-media stream having the viewport corresponding to said changed parameters of the field-of-view.

When the user of the client device, such as an HMD, changes his/her field-of-view, e.g. by turning the head, a changed identification of the field-of-view (FOV) used currently by the client is sent to the streaming server or alike. The streaming server responds by switching the streaming to the encoded sub-media stream having the viewport corresponding to the changed FOV.

According to an embodiment, switching between two sub-media streams is configured to be performed at co-located intra coded frame or Instantaneous Decoding Refresh (IDR) frames of said two sub-media streams.

Thus, for error-resiliency and with the least impact on any possible decoding errors, stream switching may preferably occur in video intra-coded keyframes or Instantaneous Decoding Refresh (IDR) frames. The streaming server or alike may comprise a switching unit, such as a Stream Switcher module, which may be configured to ensure to switch streams on key frames only and to maintain the synchronization between the current stream being streamed and the next stream to be streamed after switching.

Considering the operation of the receiver, after the receiver has received the sub-media stream, it renders the FoV ordered by the client, which FoV will be displayed to the display of the client device. The client may utilize the identifier of the sub-region content to ensure that the received sub-region corresponds to the FoV, which has been signaled to be used, as well as the current FoV where the user of the client device is watching.

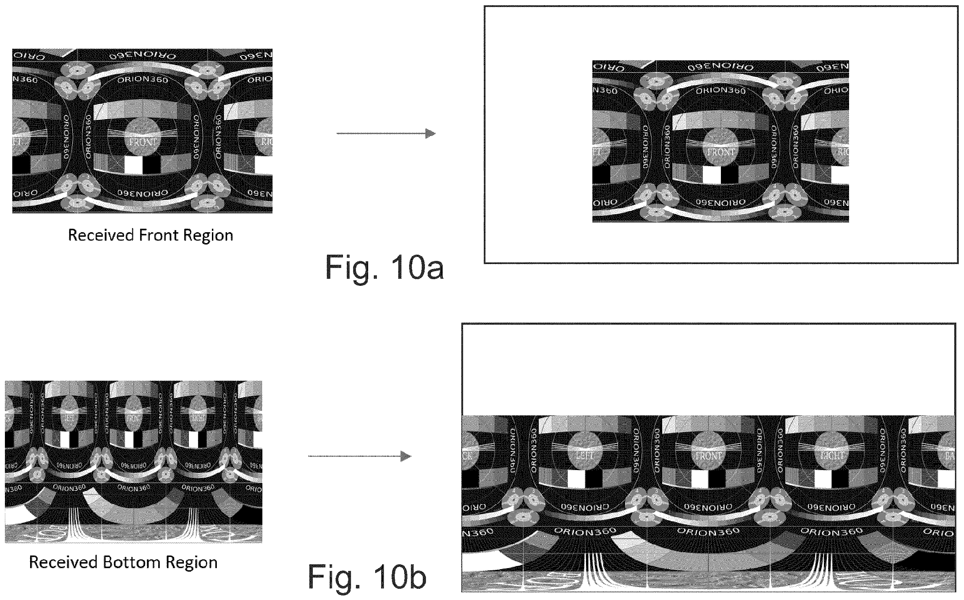

The actual rendering of the different regions may be carried out differently, depending on the type of received sub-region. For horizontal sub-regions (front, back, left, right), each frame is decoded and placed on its corresponding place into a full resolution empty image, i.e. mapped into a frame with resolution of the original ERP, as shown in Figure 10a. Then it is rendered as if the whole ERP has been received. For the top and bottom regions, the region received is horizontally upscaled to the full original ERP horizontal size and placed on its corresponding place into a full resolution empty image, as shown in Figure 10b. Then it is rendered as if all the ERPs has been received.

As discussed above, the embodiments may be implemented in a streaming server, but as well in a cloud-based system, which both may be considered to implement the so-called split rendering concept, where at least part of rendering of the 360-degree content to be streamed to the user device, a.k.a. XR (Extended Reality) device, is carried out in the streaming server or the cloud (a.k.a. XR server). An XR device may be AR wearable glasses, head mounted displays (HMD), a standard smartphone, a tablet or other. The XR device may be either directly connected to the XR server or the XR server may also be placed in an edge cloud or a central cloud if the latency requirements allow this. For the edge cloud solution, the XR server may be located in a multi-access edge computing (MEC) environment as per ETSI MEC-Multi-access Edge Computing (MEC); Framework and Reference Architecture, in an edge application server (EAS) as per 3GPP TS 23.558-Architectural Solutions for Enabling Edge Applications or as a spatial computing server (SCS) as per 3GPP TR 26.928-Extended Reality (XR) in 5G. A split-rendering scenario is also defined in 3GPP TS 26.565.

This provides various implementation options for the embodiments.

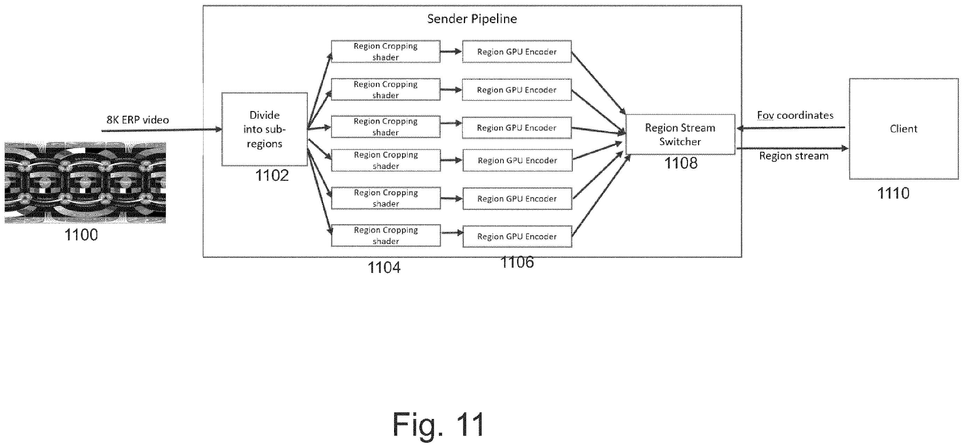

Figure 11 shows a sender pipeline (XR server) implementation according to an embodiment, where the sub-media stream(s) is delivered to a single receiver (XR device). A 360-degree equirectangular projection of the media content (1100), such as an 8K ERP video, is provided into the XR server platform. The 360-degree ERP video is divided (1102) in six sub-region videos, as described above, (i.e. left, front, right, back, top and bottom sub-regions). Each of the sub-region videos is provided in a corresponding cropping unit (1104), a.k.a. Region Cropping shader, where the sub-region video is cropped into a corresponding viewport of the 360 degree scene. The cropped sub-region video is then encoded with a corresponding encoder (1106), a.k.a. Region GPU encoder, resulting in six sub-media streams, also referred herein as Region Video Streams.

The six sub-media streams are supplied to a switcher module (1108), a.k.a. Region Stream Switcher, which is responsible for sending the sub-media stream to the client (1110), which corresponds to the FOV coordinates received from the client. All the frames in the different sub-media streams created out of the same ERP picture have the same frame type and the same synchronization. Switching between region streams is carried out at a coded key frame (such as intra-frame or IDR frame) to avoid decoding errors and making the stream switching transparent to the decoder of the client.

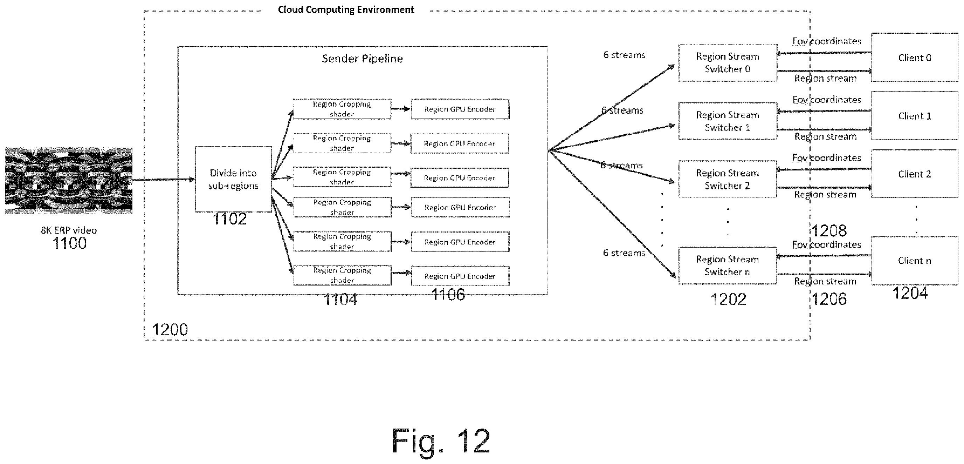

Figure 12 shows a sender pipeline (XR server) implementation according to another embodiment, where the sub-media streams are delivered to multiple receivers (XR devices, 1204). The functions in the beginning of the sender pipeline are similar to those depicted in Figure 11, i.e. the media content (1100), division into sub-regions (1102), cropping units (1104) and encoders (1106). However, the XR server, or the cloud computing environment (1200) where the XR server is implemented, is provided with a plurality of switcher modules (1202), i.e. Region Stream Switcher 0 - Region Stream Switcher n, wherein the six sub-media streams are supplied to each switcher module.

In an ideal case, the number of clients (1204) is equal to the number of switcher modules (1202), wherein each client has a corresponding switcher to select the active sub-media stream from the original omnidirectional source content, such as the 8K 360-degree video. Thus, only few encoders are needed and large number of clients may consume the six coded streams to cover the 360-degree viewing space.

According to an embodiment, the streaming to said another sub-media stream is configured to continue without interruptions after said switching.

The corresponding switcher module (1202) provides the sub-media stream (1206) corresponding to the FoV indicated by the client (1204). When the client indicates that the FoV has changed (1208), the switcher module (1202) switches to another sub-media stream (1206) corresponding to the changed FoV and the streaming (1206) to the client (1204) continues without any interruptions. Thus, comparing to the client-side switching, one of the key benefits of using the server-side switcher to switch the sub-regions is that switching the viewport does not interrupt the streaming to the client.

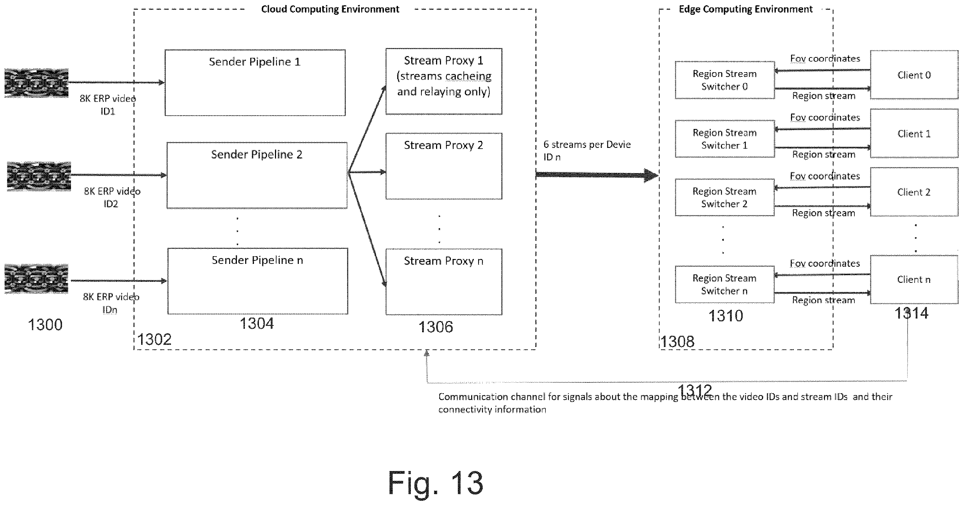

Figure 13 shows a large-scale implementation in a distributed environment according to yet another embodiment, where the functions are distributed among different network entities. Thus, a cloud computing environment (1302) may comprise a plurality of sender pipelines (1304) similar to those depicted in Figure 11, where different 360-degree media content (1300), such as 8K ERP video ID1 - 8K ERP video Idn, is provided into each sender pipeline. Each sender pipeline may be provided with multiple stream proxy servers (1306) to load-balance the requests from a large number of clients, thus facilitating to scale out the deployment and support more clients.

While the main processing pipelines remains in the central cloud, the switcher modules (1310), i.e. Region Stream Switchers, may be deployed in an Edge computing environment (1308). A communication channel (1312) may be provided between single clients (1314) and the cloud computing environment (1302) so as to provide mapping between the video IDs and stream IDs. Each sub-media stream (region stream) has its unique identifier that may be represented by its unique network address, e.g. in the URL if protocols like RTSP, or network ports. The mapping information between video IDs and stream IDs can be delivered via any out-of-band signaling channels such as HTTP, SocketIO/WebSocket, WebRTC, or any lower-level transport protocols.

The embodiments as described herein may provide various advantages. The system according to the embodiments is capable to provide a low-latency, bandwidth optimized 360-degree real-time video streaming service to a large number of receivers. Only six video encoders only per 360-degree source, e.g. a 360-degree 8K camera, are needed in the server environment to .

The embodiments relating to the encoding aspects may be implemented in an apparatus comprising means for obtaining 360-degree omnidirectional media content; means for dividing the 360-degree omnidirectional media content into a plurality of sub-region contents, wherein a field-of-view of each sub-region content covers at least partly different regions of the 360-degree omnidirectional media content such that combined field-of-views of the plurality of sub-region contents cover the 360-degree omnidirectional media content; means for cropping each of the plurality of sub-region contents into a corresponding viewport; means for encoding each of the cropped plurality of sub-region contents into a sub-media stream having the corresponding viewport and comprising metadata relating to the sub-region; means for receiving, from a client, signaling regarding parameters of a field-of-view to be used in rendering of the 360-degree omnidirectional media content; and means for streaming the sub-media stream having the viewport corresponding to said parameters of the field-of-view to the client.

According to an embodiment, said 360-degree omnidirectional media content is a 360-degree equirectangular projection of the media content and said sub-region contents comprise left, front, right, back, top and bottom regions of the 360-degree equirectangular projection.

According to an embodiment, the apparatus comprises means for resampling the top and the bottom regions of the 360-degree equirectangular projection to same resolution with the left, front, right, and back regions of the 360-degree equirectangular projection.

According to an embodiment, the field-of-view of each sub-region content overlaps with the field-of-views of each of the four neighbouring sub-region contents.

According to an embodiment, the plurality of encoded sub-media streams have the same resolution.

According to an embodiment, the apparatus comprises means for providing each of the plurality of sub-region contents with a unique identifier.

According to an embodiment, said means for encoding comprises means for synchronizing the encoding between the plurality of sub-media streams in terms of time and encoding mode.

According to an embodiment, the apparatus comprises means for switching, based on the signalling indicating that the parameters of the field-of-view of the client being changed, the streaming to another sub-media stream having the viewport corresponding to said changed parameters of the field-of-view.

According to an embodiment, switching between two sub-media streams is configured to be performed at co-located intra coded frame or Instantaneous Decoding Refresh (IDR) frames of said two sub-media streams.

According to an embodiment, the streaming to said another sub-media stream is configured to continue without interruptions after said switching.

According to an embodiment, said apparatus is a streaming server.

According to an embodiment, one or more of said means are distributed among a plurality of network entities.

The embodiments relating to the encoding aspects may likewise be implemented in an apparatus comprising at least one processor and at least one memory, said at least one memory stored with computer program code thereon, the at least one memory and the computer program code configured to, with the at least one processor, cause the apparatus at least to perform: obtain 360-degree omnidirectional media content; divide the 360-degree omnidirectional media content into a plurality of sub-region contents, wherein a field-of-view of each sub-region content covers at least partly different regions of the 360-degree omnidirectional media content such that combined field-of-views of the plurality of sub-region contents cover the 360-degree omnidirectional media content; crop each of the plurality of sub-region contents into a corresponding viewport; encode each of the cropped plurality of sub-region contents into a sub-media stream having the corresponding viewport and comprising metadata relating to the sub-region; receive, from a client, signaling regarding parameters of a field-of-view to be used in rendering of the 360-degree omnidirectional media content; and stream the sub-media stream having the viewport corresponding to said parameters of the field-of-view to the client.

Such apparatuses may comprise e.g. at least some of the functional units disclosed in any of the Figures 1, 2, 3a, 3b, 4, and 8 - 11 for implementing the embodiments.

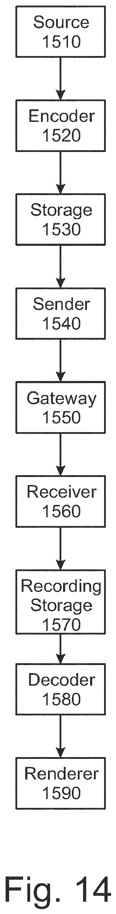

Figure 14 is a graphical representation of an example multimedia communication system within which various embodiments may be implemented. A data source 1510 provides a source signal in an analog, uncompressed digital, or compressed digital format, or any combination of these formats. An encoder 1520 may include or be connected with a preprocessing, such as data format conversion and/or filtering of the source signal. The encoder 1520 encodes the source signal into a coded media bitstream. It should be noted that a bitstream to be decoded may be received directly or indirectly from a remote device located within virtually any type of network. Additionally, the bitstream may be received from local hardware or software. The encoder 1520 may be capable of encoding more than one media type, such as audio and video, or more than one encoder 1520 may be required to code different media types of the source signal. The encoder 1520 may also get synthetically produced input, such as graphics and text, or it may be capable of producing coded bitstreams of synthetic media. In the following, only processing of one coded media bitstream of one media type is considered to simplify the description. It should be noted, however, that typically real-time broadcast services comprise several streams (typically at least one audio, video and text sub-titling stream). It should also be noted that the system may include many encoders, but in the figure only one encoder 1520 is represented to simplify the description without a lack of generality. It should be further understood that, although text and examples contained herein may specifically describe an encoding process, one skilled in the art would understand that the same concepts and principles also apply to the corresponding decoding process and vice versa.

The coded media bitstream may be transferred to a storage 1530. The storage 1530 may comprise any type of mass memory to store the coded media bitstream. The format of the coded media bitstream in the storage 1530 may be an elementary self-contained bitstream format, or one or more coded media bitstreams may be encapsulated into a container file, or the coded media bitstream may be encapsulated into a Segment format suitable for DASH (or a similar streaming system) and stored as a sequence of Segments. If one or more media bitstreams are encapsulated in a container file, a file generator (not shown in the figure) may be used to store the one more media bitstreams in the file and create file format metadata, which may also be stored in the file. The encoder 1520 or the storage 1530 may comprise the file generator, or the file generator is operationally attached to either the encoder 1520 or the storage 1530. Some systems operate "live", i.e. omit storage and transfer coded media bitstream from the encoder 1520 directly to the sender 1540. The coded media bitstream may then be transferred to the sender 1540, also referred to as the server, on a need basis. The format used in the transmission may be an elementary self-contained bitstream format, a packet stream format, a Segment format suitable for DASH (or a similar streaming system), or one or more coded media bitstreams may be encapsulated into a container file. The encoder 1520, the storage 1530, and the server 1540 may reside in the same physical device or they may be included in separate devices. The encoder 1520 and server 1540 may operate with live real-time content, in which case the coded media bitstream is typically not stored permanently, but rather buffered for small periods of time in the content encoder 1520 and/or in the server 1540 to smooth out variations in processing delay, transfer delay, and coded media bitrate.

The server 1540 sends the coded media bitstream using a communication protocol stack. The stack may include but is not limited to one or more of Real-Time Transport Protocol (RTP), User Datagram Protocol (UDP), Hypertext Transfer Protocol (HTTP), Transmission Control Protocol (TCP), and Internet Protocol (IP). When the communication protocol stack is packet-oriented, the server 1540 encapsulates the coded media bitstream into packets. For example, when RTP is used, the server 1540 encapsulates the coded media bitstream into RTP packets according to an RTP payload format. Typically, each media type has a dedicated RTP payload format. It should be again noted that a system may contain more than one server 1540, but for the sake of simplicity, the following description only considers one server 1540.

If the media content is encapsulated in a container file for the storage 1530 or for inputting the data to the sender 1540, the sender 1540 may comprise or be operationally attached to a "sending file parser" (not shown in the figure). In particular, if the container file is not transmitted as such but at least one of the contained coded media bitstream is encapsulated for transport over a communication protocol, a sending file parser locates appropriate parts of the coded media bitstream to be conveyed over the communication protocol. The sending file parser may also help in creating the correct format for the communication protocol, such as packet headers and payloads. The multimedia container file may contain encapsulation instructions, such as hint tracks in the ISOBMFF, for encapsulation of the at least one of the contained media bitstream on the communication protocol.

The server 1540 may or may not be connected to a gateway 1550 through a communication network, which may e.g. be a combination of a CDN, the Internet and/or one or more access networks. The gateway may also or alternatively be referred to as a middle-box. For DASH, the gateway may be an edge server (of a CDN) or a web proxy. It is noted that the system may generally comprise any number gateways or alike, but for the sake of simplicity, the following description only considers one gateway 1550. The gateway 1550 may perform different types of functions, such as translation of a packet stream according to one communication protocol stack to another communication protocol stack, merging and forking of data streams, and manipulation of data stream according to the downlink and/or receiver capabilities, such as controlling the bit rate of the forwarded stream according to prevailing downlink network conditions. The gateway 1550 may be a server entity in various embodiments.

The system includes one or more receivers 1560, typically capable of receiving, demodulating, and de-capsulating the transmitted signal into a coded media bitstream. The coded media bitstream may be transferred to a recording storage 1570. The recording storage 1570 may comprise any type of mass memory to store the coded media bitstream. The recording storage 1570 may alternatively or additively comprise computation memory, such as random access memory. The format of the coded media bitstream in the recording storage 1570 may be an elementary self-contained bitstream format, or one or more coded media bitstreams may be encapsulated into a container file. If there are multiple coded media bitstreams, such as an audio stream and a video stream, associated with each other, a container file is typically used and the receiver 1560 comprises or is attached to a container file generator producing a container file from input streams. Some systems operate "live," i.e. omit the recording storage 1570 and transfer coded media bitstream from the receiver 1560 directly to the decoder 1580. In some systems, only the most recent part of the recorded stream, e.g., the most recent 10-minute excerption of the recorded stream, is maintained in the recording storage 1570, while any earlier recorded data is discarded from the recording storage 1570.

The coded media bitstream may be transferred from the recording storage 1570 to the decoder 1580. If there are many coded media bitstreams, such as an audio stream and a video stream, associated with each other and encapsulated into a container file or a single media bitstream is encapsulated in a container file e.g. for easier access, a file parser (not shown in the figure) is used to decapsulate each coded media bitstream from the container file. The recording storage 1570 or a decoder 1580 may comprise the file parser, or the file parser is attached to either recording storage 1570 or the decoder 1580. It should also be noted that the system may include many decoders, but here only one decoder 1570 is discussed to simplify the description without a lack of generality

The coded media bitstream may be processed further by a decoder 1570, whose output is one or more uncompressed media streams. Finally, a renderer 1590 may reproduce the uncompressed media streams with a loudspeaker or a display, for example. The receiver 1560, recording storage 1570, decoder 1570, and renderer 1590 may reside in the same physical device or they may be included in separate devices.

A sender 1540 and/or a gateway 1550 may be configured to perform switching between different representations e.g. for switching between different viewports of 360-degree video content, view switching, bitrate adaptation and/or fast start-up, and/or a sender 1540 and/or a gateway 1550 may be configured to select the transmitted representation(s). Switching between different representations may take place for multiple reasons, such as to respond to requests of the receiver 1560 or prevailing conditions, such as throughput, of the network over which the bitstream is conveyed. In other words, the receiver 1560 may initiate switching between representations. A request from the receiver can be, e.g., a request for a Segment or a Subsegment from a different representation than earlier, a request for a change of transmitted scalability layers and/or sub-layers, or a change of a rendering device having different capabilities compared to the previous one. A request for a Segment may be an HTTP GET request. A request for a Subsegment may be an HTTP GET request with a byte range. Additionally or alternatively, bitrate adjustment or bitrate adaptation may be used for example for providing so-called fast start-up in streaming services, where the bitrate of the transmitted stream is lower than the channel bitrate after starting or random-accessing the streaming in order to start playback immediately and to achieve a buffer occupancy level that tolerates occasional packet delays and/or retransmissions. Bitrate adaptation may include multiple representation or layer up-switching and representation or layer down-switching operations taking place in various orders.

A decoder 1580 may be configured to perform switching between different representations e.g. for switching between different viewports of 360-degree video content, view switching, bitrate adaptation and/or fast start-up, and/or a decoder 1580 may be configured to select the transmitted representation(s). Switching between different representations may take place for multiple reasons, such as to achieve faster decoding operation or to adapt the transmitted bitstream, e.g. in terms of bitrate, to prevailing conditions, such as throughput, of the network over which the bitstream is conveyed. Faster decoding operation might be needed for example if the device including the decoder 1580 is multi-tasking and uses computing resources for other purposes than decoding the video bitstream. In another example, faster decoding operation might be needed when content is played back at a faster pace than the normal playback speed, e.g. twice or three times faster than conventional real-time playback rate.

In the above, where the example embodiments have been described with reference to an encoder, it needs to be understood that the resulting bitstream and the decoder may have corresponding elements in them. Likewise, where the example embodiments have been described with reference to a decoder, it needs to be understood that the encoder may have structure and/or computer program for generating the bitstream to be decoded by the decoder.

The embodiments of the invention described above describe the codec in terms of separate encoder and decoder apparatus in order to assist the understanding of the processes involved. However, it would be appreciated that the apparatus, structures and operations may be implemented as a single encoder-decoder apparatus/structure/operation. Furthermore, it is possible that the coder and decoder may share some or all common elements.

Although the above examples describe embodiments of the invention operating within a codec within an electronic device, it would be appreciated that the invention as defined in the claims may be implemented as part of any video codec. Thus, for example, embodiments of the invention may be implemented in a video codec which may implement video coding over fixed or wired communication paths.

Thus, user equipment may comprise a video codec such as those described in embodiments of the invention above. It shall be appreciated that the term user equipment is intended to cover any suitable type of wireless user equipment, such as mobile telephones, portable data processing devices or portable web browsers.

Furthermore elements of a public land mobile network (PLMN) may also comprise video codecs as described above.

In general, the various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs) and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

## Claims

1. An apparatus comprising:
means for obtaining 360-degree omnidirectional media content;
means for dividing the 360-degree omnidirectional media content into a plurality of sub-region contents, wherein a field-of-view of each sub-region content covers at least partly different regions of the 360-degree omnidirectional media content such that combined field-of-views of the plurality of sub-region contents cover the 360-degree omnidirectional media content;
means for cropping each of the plurality of sub-region contents into a corresponding viewport;
means for encoding each of the cropped plurality of sub-region contents into a sub-media stream having the corresponding viewport and comprising metadata relating to the sub-region;
means for receiving, from a client, signaling regarding parameters of a field-of-view to be used in rendering of the 360-degree omnidirectional media content; and
means for streaming the sub-media stream having the viewport corresponding to said parameters of the field-of-view to the client.

2. The apparatus according to claim 1, wherein said 360-degree omnidirectional media content is a 360-degree equirectangular projection of the media content and said sub-region contents comprise left, front, right, back, top and bottom regions of the 360-degree equirectangular projection.

3. The apparatus according to claim 2, further comprising:
means for resampling the top and the bottom regions of the 360-degree equirectangular projection to same resolution with the left, front, right, and back regions of the 360-degree equirectangular projection.

4. The apparatus according to any preceding claim, wherein the field-of-view of each sub-region content overlaps with the field-of-views of each of the four neighbouring sub-region contents.

5. The apparatus according to any preceding claim, wherein the plurality of encoded sub-media streams have the same resolution.

6. The apparatus according to any preceding claim, further comprising:
means for providing each of the plurality of sub-region contents with a unique identifier.

7. The apparatus according to any preceding claim, wherein said means for encoding further comprises means for synchronizing the encoding between the plurality of sub-media streams in terms of time and encoding mode.

8. The apparatus according to any preceding claim, further comprising:
means for switching, based on the signalling indicating that the parameters of the field-of-view of the client being changed, the streaming to another sub-media stream having the viewport corresponding to said changed parameters of the field-of-view.

9. The apparatus according to claim 8, wherein switching between two sub-media streams is configured to be performed at co-located intra coded frame or Instantaneous Decoding Refresh (IDR) frames of said two sub-media streams.

10. The apparatus according to claim 8 or 9, wherein the streaming to said another sub-media stream is configured to continue without interruptions after said switching.

11. The apparatus according to any preceding claim, wherein said apparatus is a streaming server.

12. The apparatus according to any of claims 1 - 10, wherein one or more of said means are distributed among a plurality of network entities.

13. A method comprising:
obtaining 360-degree omnidirectional media content;
dividing the 360-degree omnidirectional media content into a plurality of sub-region contents, wherein a field-of-view of each sub-region content covers at least partly different regions of the 360-degree omnidirectional media content such that combined field-of-views of the plurality of sub-region contents cover the 360-degree omnidirectional media content;
cropping each of the plurality of sub-region contents into a corresponding viewport;
encoding each of the cropped plurality of sub-region contents into a sub-media stream having the corresponding viewport and comprising metadata relating to the sub-region;
receiving, from a client, signaling regarding parameters of a field-of-view to be used in rendering of the 360-degree omnidirectional media content; and
streaming the sub-media stream having the viewport corresponding to said parameters of the field-of-view to the client.

14. The method according to claim 13, wherein said 360-degree omnidirectional media content is a 360-degree equirectangular projection of the media content and said sub-region contents comprise left, front, right, back, top and bottom regions of the 360-degree equirectangular projection.

15. An apparatus comprising at least one processor and at least one memory, said at least one memory stored with computer program code thereon, the at least one memory and the computer program code configured to, with the at least one processor, cause the apparatus at least to perform:
obtain 360-degree omnidirectional media content;
divide the 360-degree omnidirectional media content into a plurality of sub-region contents, wherein a field-of-view of each sub-region content covers at least partly different regions of the 360-degree omnidirectional media content such that combined field-of-views of the plurality of sub-region contents cover the 360-degree omnidirectional media content;
crop each of the plurality of sub-region contents into a corresponding viewport;
encode each of the cropped plurality of sub-region contents into a sub-media stream having the corresponding viewport and comprising metadata relating to the sub-region;
receive, from a client, signaling regarding parameters of a field-of-view to be used in rendering of the 360-degree omnidirectional media content; and
stream the sub-media stream having the viewport corresponding to said parameters of the field-of-view to the client.
